# EUROPEAN PATENT APPLICATION

(11) **EP 2 363 600 A2**
(43) Date of publication of application: **07.09.2011**
(21) Application number: 11156579.2
(22) Date of filing: 02.03.2011
(51) Int. Cl.: F03D 1/06

(54) **Clear wind tower system technology**

(30) Priority: 03.03.2010 US 309981 P; 21.02.2011 US 34883 P
(71) Applicant: Caires, Richard, Greenwich, CT 06830 (US)
(72) Inventor: Caires, Richard, Greenwich, CT 06830 (US)
(74) Representative: Hanson, William Bennett

(57) **Abstract**

A wind tower system includes a number of wind tower system rotor blades (3) formed with substantially clear composite fibre reinforced polymer (FRP), resin and hardener polymers, a nacelle (5) made at least partially from composite FRP or steel-based, a hub (2) connecting the plurality of wind tower system rotor blades (3) to the nacelle (5) and a tower (1) upon which the nacelle is connected. The wind tower system rotor blades are designed for minimizing wind turbulence and, therefore, sound during active wind tower system operation and freely transmit light to minimize blade light reflectivity and therefore visual presence and the nacelle (5) and tower (1) are coated to reduce visual impact.

## Description

The invention provides a wind tower system with composite fibre-reinforced polymer (FRP) rotor blades, FRP exterior sheeting for the nacelle and steel support towers. More particularly, the invention provides an improvement over known wind tower system component manufacturing that utilizes alternative materials and methods of manufacture and creates advanced transparent composites for constructing rotor blades for utility sized wind tower systems that while transparent, maintain their structural integrity and performance requirements, and realize a finished transparent wind tower product that is lighter, less expensive and requires less time, fewer steps and components to manufacture than conventional wind tower system products.

At the end of 2009, the installed capacity of wind power in the United States was over 35,000 megawatts (MW), deriving from over 10,000 turbines. This made the US the world leader in 2009, and wind power accounts for only 1.2% of the electricity generated in the United States. In 2010, China surpassed the United States as the largest user of wind powered turbines.

Wind energy is the world's fastest growing energy source and by 2010, the World Wind Energy Association expects 160 GW of capacity to be installed worldwide, up from 73.9 GW at the end of 2006. This suggests an anticipated net growth rate of more than 21% per year. By the end of 2009 wind tower system installations in the United States grew 39% from 2008.

Recently, many countries have established goals and/or mandates to bring electric generation derived from wind up to 20% or more of the electric needs of a particular country. Currently the United States produces only 1.2% of its electricity from wind. As a result, there is a need for the construction of many more wind towers to meet these mandates, goals and the demand for renewable, clean wind energy. Due to the prior art or common current methods of construction used by the industry, a great increase in the amount of visual pollution and shadow flicker pollution will result.

Wind power is generally considered a renewable, efficient and clean energy source. The main problem with wind power is the significant visual environmental pollution caused by the sheer size of the wind tower systems that are used to convert wind into electricity. Concerns, costs, delays, legal fess and capital losses arising from objections to the visual environmental pollution are expected to become more numerous and critical as the United States plans to increase wind tower system capacity by 1000% over 2009 levels.

In more detail, utility sized (1.5MW - 5+MW) turbines are very large approaching 120+ m (400+ feet) high and often are nested in wind tower system farms in close proximity, for example, within 300 m (1,000 feet), to each other. As a result, a multitude numbering in the hundreds of these typically white wind tower systems on some sites dominate the landscape causing visual environmental pollution by dramatically obscuring and altering the landscape permanently.

It should be little surprise that the wind energy industry is currently experiencing rapidly growing and organized objections to their implementation, including claims and lawsuits typically asserting that wind tower systems ruin the look of landscapes and vistas from miles away due to their immense size. As wind tower system encroachment to population centres increases, so do the complaints about visual pollution and other issues described in more detail below.

The rotor blades are the most visible component of a wind tower turbine system. Generally, the circular sweep area of the rotor blade is on average 44 times larger than the silhouette of the tower and nacelle, about an area equal to 3 football fields. The motion of the rotor blades as they spin against the static landscape attracts the eye of an observer which makes these large structures very obvious. When combined in a multitude of turbines as in a wind tower system farm, the rotating blades spinning at random speeds dominate the vistas and harm the landscape.

The Enercon Company's E 126 is the world's tallest wind turbine as of Jan 1, 2010, with a hub height of 135 m (453 feet) and its rotor blades reach another 63.5 m (205 feet) above the hub, to bring the total height to 198.5 m (658 feet). To put the size of this wind tower system in perspective, the Washington monument is 169m (555 feet) tall and the U.S. Capitol building is 88 m (288 feet) tall. Today, the visual obtrusiveness of these turbines is the biggest impediment to their deployment whether on land or at sea. Complaints about seeing them have outweighed economic and independent energy concerns and even legislative mandates. Concerns about visual pollution have resulted in years of delays, abandonment or scaling back of projects and almost $1 billion dollars in legal fees, losses and capital cost of planned wind tower system installations worldwide.

The visual pollution impact also has a huge deleterious effect of property values of adjacent property to a wind tower or a wind tower system farm. If a property is within the shadow flicker effect, the negative effect on property value is staggering with many owners claiming their homes are not saleable. Previously these homes were able to fetch normal prices and may have had a great view of some vista, but when a tower is installed that impacts the house, one owner said it was same effect as if a garbage dump was opened next door. Worse yet, shadow flicker is suspected as a cause of health issues which is being debated by the industry and in the courts.

Even property not adjacent to a wind tower system site, but merely in the site line of a wind tower system experiences a reduction in the value of the property due to the visual pollution from these sites. Although industry groups expectedly dispute these claims, the discourse is just beginning and it is too early to come to a conclusion. Currently Rhode Island's Narragansett Bay wind farm project "Cape Wind" that has been mired in controversy all stemming from the issue of visual pollution was finally approved to proceed in a scaled back size with construction as the first off-shore wind farm in the U.S. after nearly 10 years. Cape Wind is a prime example of the real costs and delays the concern over visual pollution can cause. The invention described herein is designed to mitigate these concerns by reducing the amount of visual pollution caused by a wind tower system.

In the near future, all of these concerns will be multiplied as wind power continues its expansion towards stated escalation goals from many countries around the world to get 20%+ of their energy needs from wind. Currently around 1.2% of all energy generated in the United Sates is from wind; in most countries the percentage is much less. So with an expected 1,000+% increase in capacity with new wind tower system installations in the United States alone, the issue of visual pollution will likewise escalate.

In addition, the operation of such wind tower systems create several other environment negative effects, including an effect caused by the shadows cast by the rotating blades called "shadow flicker". It is believed that shadow flicker negatively affects the health of some people exposed to it over time, similar to the well documented exposure to strobe lights. Shadow flicker affects the quality of life and property values of people and residences in the shadow area of a wind tower system.

Shadow flicker is caused by the rotating shadows cast by the turning rotor blades on the surrounding landscape. Each rotor blade on a utility sized wind tower system is very large; up to 60+ m (200+ feet) long and 3 m (10 feet) wide weighing 12.7 tonnes (14 short tons). Most wind tower systems contain 3 rotor blades that cast a shadow which rotates with a tip speed of up to 290 km/h (180 miles an hour). Any person or structure, such as a house that is located in the area of this shadow experiences a very distinct and disturbing effect of going from daylight to shadow up to 180 times every minute, depending on the speed of the rotation of the rotor blade. As the rotor blades rotate, each blade consecutively blocks the sun as the blade rotates on the axis of the wind tower system nacelle. The lower the sun is in the sky the longer these shadows reach out from the location of the tower, thus affecting a very large area.

The effect on the landscape where the shadow is cast is similar to that of a strobe light and even more disturbing because it occurs during the day. When inside a building or structure that has a window or opening to allow outside light to enter and fill the room, the effect is even more pronounced because no other sources of light from artificial lights are normally used during the day to reduce the shadow/light/shadow/light sequence of shadow flicker. People exposed to this for even a short time are disturbed by this visual pollution which is similar to turning a light on and off every second as the shadow from a rotor blade quickly passes by as it rotates only to be followed by the same sequential effect from the following blade over and over.

Medical science has firmly established a link with strobe light flickering and seizures. The invention described below utilizes certain manufacturing techniques and materials to construct the offending rotor blades that cast these shadows out of transparent material that would completely eliminate any shadow flicker effects and the corresponding health issues whatever they may be, because a transparent rotor blade does not cast a shadow. The light passes right through it.

Heretobefore, attempts have been made to overcome these shortcomings. For example, a known construction calls for tiny blades using unspecified transparent or translucent gel coat material which may not be suitable or strong enough to be installed on new generation larger technology or retrofit existing blades that are 27 m (90 feet) long to over 60 m (200 feet) long and weigh 12. 7 tonnes (14 short tons) each. But using a transparent or translucent coating, a so-called gel coat, is only the top layer of a FRP composite structure measuring at most 3.2 mm (1/8th inch) in thickness.

This thickness of material is inadequate for the structures the invention addresses which can be two sides of 15. 2 cm (6 inch) thick panels for a total of 30.5 cm (12 inches) thickness. A translucent material when layered to such a 30. 5 cm (12 inch) thickness will appear to be opaque and be very visible and obscure the light transmission. For example, WO97/03287 at page 2, line 20, admits that "the blade is not directly transparent."

Known techniques make no mention of the refractive index matching science or fabrication process of diverse materials that is required of all components in a composite to truly be transparent is even in the prior art and cannot be considered obvious.

An aim of the invention described herein is complete transparency and further that all the RI (refractive indexes) of the component should match.

Achieving transparency in a modern composite is very complicated. It is not as the prior art contends that one simply mixes a transparent gel coat and transparency is achieved, that is far from reality. Completely transparent materials with varying refractive indexes, when stacked together will have the result of obscuring light at their barriers or where they intersect each other, known as the interface thus losing their transparency when combined. An example is air and water are both transparent but where they border each other, known as the interface, the light is bounced or deflected to give a reflection of the surrounding landscape on the surface of a pond instead of being able to see the bottom of the pond.

The invention provides manufacturing methods that reduce the cost of, the weight of, and the time required to manufacture a rotor blade through a simplified process that eliminates certain steps and materials commonly used in the prior art.

The invention reduces the major concern of visual environmental pollution caused by wind tower systems.

The invention remediates the visual pollution issue caused by operating a wind tower system by manufacturing the rotor blades to be completely transparent, thus eliminating their ability to even cast an opaque shadow, and to camouflage other components that must be made from opaque materials like steel.

Another negative effect of operating a wind tower system that the invention described herein mitigates is the sonic sound caused by the rotating blades and the gearing of the electric generating power units located inside the nacelle. Through an innovative design of the blade geometry and a sound deadening treatment incorporated into the trailing edge of the rotor blade, the invention reduces the sound generated from the motion of the blades.

Another negative effect of operating a wind tower system is the deadly impact on birds and bats by the rotating rotor blades. The invention described herein will remediate this issue with some avoidance techniques to be incorporated into the manufacturing of the rotor blades.

The present invention is designed to reduce our visual awareness of and the visual environmental pollution caused by utility sized (up to approximately 120+ m (400+ feet) in height), almost always white in colour, electric generating wind tower systems. In addition the invention addresses some other major issues relating to these wind tower system summarized above and explained in greater detail below. For example, wind tower systems built according to the invention have minimal wind tower system shadow flicker.

There are three distinct above ground or above water sections of a wind tower system, the tower, the nacelle (which contains the power generation equipment and gearing) and the rotor blades.

The present invention embodies a method to manufacture as many components as possible with clear or transparent material to reduce the ability to see the wind tower system from a distance. The main focus of the invention is on the rotor blade portion of the wind tower system, which can be made more easily from transparent materials than the steel tower and nacelle. Components that cannot be made from transparent material like the tubular steel towers or the nacelle will be painted to blend into the landscape or be covered with mirror materials, either sprayed on or applied to reduce the visual impact.

There has been a need for the construction of lightweight and more durable wind towers made of composite materials where transportation and erection problems make the use of heavy equipment difficult and in offshore regions where corrosion is of major concern for steel structures. The same methods and materials used for the rotor blades may be employed to manufacture composite towers to make them transparent as well. The rest of the wind tower structure that is not able to be manufactured using transparent materials will be surfaced with a vision reflecting matt mirror type coating to further minimize the visual obtrusiveness of the entire wind tower system structure. In an embodiment, the entire exterior skin of the wind tower system rotor blade structure will be coated with an anti-reflective coating commonly used in the optometry field to minimize any reflection from the transparent rotor blades This effect to the observer will be like looking at a piece of glass a mile away - virtually imperceptible.

The invention provides a wind tower system according to claim 1 and a method of manufacturing a wind tower system rotor blade according to claim 12.

The invention comprises a wind tower system that includes a number of wind tower system rotor blades formed with clear composite fibre-reinforced polymer (FRP), resin and hardener polymers, a nacelle made at least partially from composite FRP or steel-based, a hub connecting the plurality of wind tower system rotor blades to the nacelle and a tower upon which the nacelle is connected. The wind tower system rotor blades are designed for minimizing wind turbulence and, therefore, sound during active wind tower system operation and freely transmit light to minimize blade light reflectivity and therefore visual presence and wherein the nacelle and tower are coated to reduce visual impact.

The invention also provides a method of manufacturing a wind tower system rotor blade. The method comprises inserting a plurality of layers of resin-impregnated fibres in respective top and bottom upper and lower blade half shell moulds configured such that when joined, the two blade halves form a trailing edge with a sound deadening fringe, injecting resin into the moulds using vacuum infusion to render the rotor blades substantially light transmissive, thermo curing and pressure forming to create a blade shape, further vacuum treating to purge the resin-impregnated fibres of any air to optimize clarity, strength and transparency and heating to activate chemical processes to cure the resin and adjust the RI of all components to match after curing is complete.

Optional features of the invention are set out in the dependent claims.

A rotor blade skeleton support structure may be arranged in a layered geometric pattern such as a honeycomb pattern that is bonded to maximize the strength and flexibility of the entire structural support element.

The tower section may be constructed at least partially with fibre reinforced polymer (FRP) or steel to realize a hollow centre after assembly, and cover sections that are impervious to light with a mirror based reflection diffusing material.

The mirror based reflection diffusing material may be applied by spraying.

Black silhouette decals of birds of prey in attack mode may be attached to various locations on the front and back sides of the rotor blades to deter birds from approaching the wind tower system.

The hub may include a holographic laser curved line decal in a shape and appearance known to deter and scare birds from approaching the wind tower system.

Sound emitting wind powered devices, which emit a frequency of a series of sounds in the 80,000 to 120,000 Hz range, may be attached, to interfere with a bat's echolocation ability and cause the bat veer away from the wind tower system.

Aspects of the invention will become apparent upon reading the following detailed description and upon reference to the accompanying drawings, in which like references may indicate similar elements:

FIG. 1 presents a frontal view of a wind tower system of the invention;

FIG. 2 presents a side view of a wind tower system of FIG. 1;

FIG. 3 presents a close up frontal view of a rotor blade 3 of the wind tower system of Figs. 1 and 2;

FIG. 4 presents a sectional top view of the top half 3A of rotor blade 3, along line I - I shown in FIG. 2;

FIG. 5 presents a sectional view of the bottom half 3B of rotor blade 3, along line II - II shown in FIG. 4;

FIG. 6 presents a sectional side view separated of the top half 3A and the bottom half 3B of rotor blade 3, along line I - I shown in FIG. 2;

FIG. 7 highlights cross sectional side views of the separated top half 3A and the bottom half 3B of rotor blade 3, along line IV - IV shown in FIG. 6;

FIG. 8 presents a cross sectional side view of the separated top half 3A and the bottom half 3B of rotor blade 3, along line IV - IV shown in FIG. 6;

FIG. 9 presents an external side view of rotor blade 3 with halves 3A and 3B bonded together at a bonding edge 17; and

FIG. 10 presents a mould used to make rotor blade half 3B.

The following is a detailed description of example embodiments of the invention depicted in the accompanying drawings. The example embodiments are in such detail as to clearly communicate the invention. However, the amount of detail offered is not intended to limit the anticipated variations of embodiments; on the contrary, the intention is to cover all modifications, equivalents, and alternatives falling within the scope of the present invention, as defined by the appended claims. The descriptions below are designed to make such embodiments obvious to a person of ordinary skill in the art.

As described above, the invention is directed to the improved manufacture of composite fibre-reinforced polymer (FRP) rotor blades, nacelle FRP exterior sheeting and the steel support towers for wind tower systems. To do so, the invention utilizes heretobefore unknown materials and methods of manufacture to create advanced transparent composites, for example, to construct the rotor blades while maintaining structural integrity and performance requirements of the blade. These new advanced composites produce a finished, transparent product that is lighter, less expensive to manufacture and requires less time, fewer steps and components to manufacture. Perhaps most importantly, these transparent wind tower system rotor blades are of the size required to retrofit the existing installed base of standard opaque, mostly white utility sized blades.

The difference in refractive indexes is the basis for how fibre optic cable works and keeps the light signal travelling along its core due to its surrounding jacket of glass having a slightly higher refractive index than the core glass strand, thus deflecting the light back into the core of the fibre optic cable. If the refractive indexes of the core and jacket glass of a fibre optic cable were matched, then the light signal would escape from the core and degrade quickly. This degradation is the objective of the invention described herein, to allow light to pass through all the components in the composite without refractive index related interference. Many variables exist in creating the transparent finished product that permits nearly 100% light transmission that the prior art does not consider at all.

This invention incorporates creating entirely new polymer resin formulations along with improvements in refining and purifying the polymer resins and hardeners used to mix with the fibre reinforcing material to reduce contaminants that interfere with the transparency of the blade composite. The science of matching refractive index (RI) is employed to create a composite in which all the components have matching refractive indexes which is required to achieve a truly transparent composite material that is constructed of a multitude of components, i.e. glass fibre, chemical size, resin, hardeners, activators, wetting agents, anti-gas agents, etc.

Each material that goes into the composite is specifically formulated to have a specific refractive index after the composite goes through the curing process. Certain components to the composite start out with a specific refractive index which will change during the curing process when exposed to exothermic heat from the chemical reactions of the composite's chemicals and when additional heat, pressure or vacuum is applied to eliminate the discolouring effect of a chemical such as cobalt or alter the physical properties of some other material in the composite.

The complex recipe disclosed herein forces all the component parts in a composite to act in a certain manner under varying manufacturing process to produce a perfectly matched refractive index composite that will be crystal clear at thicknesses of 1.5 m (five feet). The resulting finished rotor blades are completely transparent and pervious to light within the visual colour spectrum perceivable to humans. This alleviates the effect of visual pollution on the landscape; caused by rotating rotor blades of electric generating wind tower systems and wind tower system farms both onshore and offshore because one will be able to see through the rotor blade.

These new customized alternative materials and methods of manufacture will result in the rotor blade of a wind tower system with greatly reduced visibility at 90 m (100 yards) distance from the tower base and will be virtually not visible at distances over 450 m (1,500 feet). Most States in the United States and in jurisdictions in other parts of the world are setting wind tower system distance setbacks at minimum of 3 times to 10 times the height of the rotor, so the closest observer for any utility sized 1-7 megawatt wind tower system would average 360 to 1,200 m (1,200 to 4,000 feet) from the base of the tower. At these distances, the clear transparent rotor blade will be extremely difficult to observe.

This invention also eliminates the phenomena know as shadow flicker that is caused by the shadows cast by operating a prior art conventional opaque wind tower system. A modern utility sized wind tower system limits its RPM (revolutions per minute) to an average of 60. At 60 RPM, a 3 bladed wind tower system will cast a shadow on an object or a human, 180 times per minute or 3 times every second. People exposed to this on/off shadow flicker have expressed in lawsuits, health issues ranging from seizures, rapid heartbeat, nausea and blurred vision down to a simple reduction in the quality of their life of being able to enjoy a sunny day.

The transparent blades produced from this invention will not cast a shadow as a result of using materials that have light transmission characteristics of up to 100%. A human standing in the shadow of a wind tower system with the present technology installed will barely perceive any variation in their surrounding light unlike the on-off complete shadow to normal light that occurs up to 180 times a minute with the prior art.

As for the noise of an operating wind tower system, in most cases, it is not mechanical noise arising from the central gear box or nacelle of a turbine that people react to, but rather the sound of the blades, which in modern turbines are mammoth appendages well over 30 m (100 feet) long, as they slice through the wind. The noise is caused by the trailing edge of a blade and is a significant and growing problem as more and more wind tower systems are being placed in close proximity to human population centres. The wind industry has long been dogged by a rapidly growing chorus bearing all manner of complaints and lawsuits about turbine noise and allegations that they have direct physiological impacts such as rapid heart beat, nausea and blurred vision caused by the ultra-low-frequency sound and vibrations from the rotor blades, in addition to lowering property values and diminished quality of life claims.

Noise emissions are affected by the speed of the rotor blades' trailing edges and tip speed which vary by the 5th power of blade speed - a small increase in tip speed can make a large difference. The invention utilizes a sound deadening transparent feathering treatment applied to the trailing edge of the rotor that disrupts the source of a sonic effect of two air streams on either side of a blade's surface turbulently reuniting at the trailing edge. This design breaks down turbulence into smaller currents called micro-turbulences so that the trailing edge fringes can reduce turbulence behind the rotor's trailing edge by providing multiple fringe structures that spread out the area of impact of these colliding airstreams and reduce the turbulence and hence the noise associated with it.

Wind tower system rotors blades have been implicated in the deaths of thousands of birds and bats due to collisions with the rotor blades. Many government and industry funded studies have been conducted to study this issue and no viable solution has come from them. The consensus of these studies was simply to advise developers to avoid locating wind tower systems along migration routes of birds and bats. That is impractical, as birds and bats are everywhere, and does nothing to address the tens of thousands of installed wind tower systems currently and continuing to impact birds and bats. No mitigation methods were offered.

While the invention's transparent material and the reduced ability to see a rotor blade constructed of such materials raises the question about birds not being able to see the rotor thus being more likely to be struck by it, the invention mitigates the issue.

To understand same, it is important to examine the way a bird reacts to any structure to avoid an impact and how a wind tower system rotor strikes a bird. A bird does not need to see a wind tower system or any obstacle from miles away to avoid it. A rotating blade can strike a bird travelling along a flight path as it intersects the flight path unknown to the bird that is focused on obstacles and dangers in front of it. No wind tower system on earth has any type of deterrent marking to scare birds away. The aviation industry universally has adopted painting white curved lines on the rotor hub of all jet engines to help mitigate bird strikes. The premise behind these lines is that a bird perceives the rotor as the eye of a bigger bird and the one thing that motivates and scares birds away is the possibility of becoming a meal for another larger bird.

The invention described herein applies a series of lines on the rotors of the wind tower systems that are made from a laser holographic material. The aviation industry adaptation of painting the rotors has the desired effect on birds due to the high RPM of the jet rotor hub. Wind tower systems rotate much slower so the use of more obvious laser holographic rainbow material can attract the attention of a bird at slower RPM and give the bird a warning to veer away.

This solution described above is limited to birds approaching the wind tower system from the front where the rotor blade hub is located. Since the wind tower system is stationary a supplemental method to deter and scare a bird away from all angles of approach is applied. Decals of birds of prey silhouettes are made from black material and applied to the transparent rotor blades at several locations from the hub to the tip. This application alerts a bird to danger and avoids the intersecting impact described above because the approaching bird sees the moving image of a bird of prey from a distance that is sufficient to view the entire wind tower system. The combination of these two methods will alert a bird from any approaching angle that danger is ahead and divert the bird's flight path. The application of the decals will not affect the benefit of transparent rotor blades on humans as they decals are to small to observe from a small distance.

Bats are not additionally disadvantaged by the transparent rotor blade structure since they operate at night and vision is not relied upon. The invention described herein describes an effective method to deter bats from coming near a wind tower system rotor blade. Bats require very sensitive hearing to compensate for their lack of visual stimuli, particularly in a hunting situation, and for navigation. Their hearing range is between 20 Hz and 120,000 Hz. They locate their prey by means of echolocation. A limitation of echolocation is likely to be the range at which it can operate. High frequencies have a short range of about 6.1 m (20 ft) at the most for a small bat and perhaps less than 3 m (10 ft) when a small insect is to be detected. Bats hear far beyond our human hearing capacity. Frequency is how fast an object vibrates and sound vibrates in waves. The vibrations are measured in Hertz. So one Hertz (1 Hz) is equivalent to one vibration in a second. Humans can hear from 20 Hz to 20 kHz. Anything higher is called ultrasound or ultrasonic sound. The reason that bats use ultrasound is because it has such a high frequency and it has a low diffraction or it bends less. They use this sound to do certain things such as catching their prey and also just moving around. They make a sound and wait for it to bounce back to hear it. If they hear it come faster in a particular area than the rest of the sounds then they know that something is near.

The invention incorporates a wind driven sound emitting device that produces a series of sounds in the 80,000 to 120,000 Hz range to interfere with a bat's echolocation ability and drive them away from the wind tower system. The short wavelength of these sound generated will not be heard by humans because humans are incapable of hearing those frequencies or any animal such as dogs because the sound emitted by the device will dissipate due to the short range of such frequency and the low volume. This system is designed to only operate while the rotors are moving and pose a danger to bats as they are powered by air movement.

The invention simplifies the manufacturing process, cost, time and weight of the wind tower system rotor. One of the most important goals when designing larger blade systems is to keep blade weight under control. Blade mass scales as the cube of the turbine radius, loading due to gravity becomes a constraining design factor for systems with larger blades. A single utility sized blade can weigh 12. 7 tonnes (14 short tons).

Prior art epoxy-based composites are of greatest interest to wind turbine manufacturers because they deliver a key combination of environmental, production, and cost advantages over other resin systems. As turbine blades are approaching 60 m (200 feet) and greater, infusion techniques are becoming more prevalent as the traditional resin transfer mould injection time is too long as compared to the resin set-up time, thus limiting laminate thickness. Injection forces resin through a thicker ply stack, thus depositing the resin in the laminate structure before gelatin occurs. Specialized epoxy resins have been developed to customize lifetimes and viscosity to tune resin performance in injection applications.

Carbon fibre-reinforced load-bearing spars have recently been identified as a cost-effective means for reducing weight and increasing stiffness. The use of carbon fibres in 60 metre turbine blades is estimated to result in a 38% reduction in total blade mass and a 14% decrease in cost as compared to a 100% fibreglass design.

The invention eliminates several components in a prior art rotor blade to produce a finished product that does not use gel-coat surface coating or paint. This saves the cost of these products, or components, the cost of labour and capital equipment needed to apply them, the time needed to apply and finish them and the corresponding weight of those products. The infusion process utilized takes pre-cut, specially matched refractive index fibreglass reinforcement and directly vacuum infuses specially formulated crystal clear resin into a compression mould capable of heating the resin/glass mixture to 82 °C (180 degrees Fahrenheit) for curing. This step is implemented while applying pressure to the part to produce a smooth finish on the outside and the inside of the part. Producing a smooth internal surface of the part is a vital aspect to maintain transparency of the finished product that joins two halves on a blade as described below.

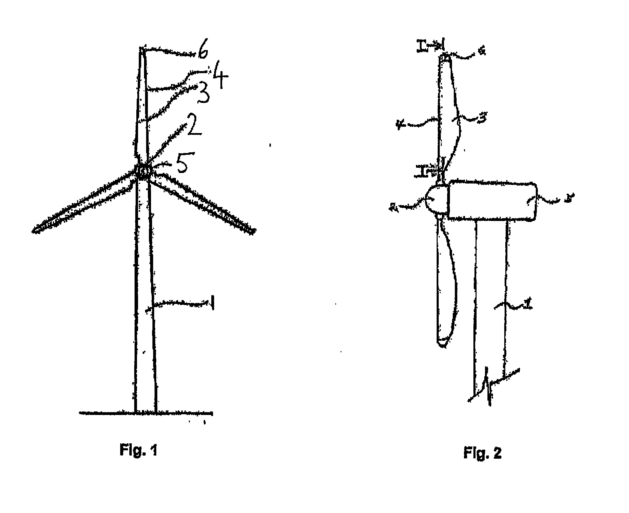

Turning now to FIGs. 1-10, FIG. 1 depicts a frontal view of a wind tower system consisting of a tower 1, a hub axis 2, a number of rotor blades 3, a leading edge of the rotor blade 4, a nacelle 5 and a rotor blade tip 6. The rotor blades 3 are attached to a nacelle 5 via hub 2. The nacelle 5 thereby secures the hub and blades to the tower 1. As attached to the hub, the rotor blades can rotate when in the presence of wind along a generally horizontal axis created by the nacelle gearing 5.

FIG. 2 is a side view of the FIG. 1 wind tower system. FIG. 2 highlights the leading edge 4 of one of the blades 3, which are attached to nacelle 5 via hub 2. As mentioned above, the invention describes a manufacturing process for producing a wind tower system rotor blade 3 as shown in FIG. 1. Such wind tower system blade exhibits the same or superior performance, strength or durability characteristics of the prior art but changes the appearance of the finished product to be completely clear and transparent.

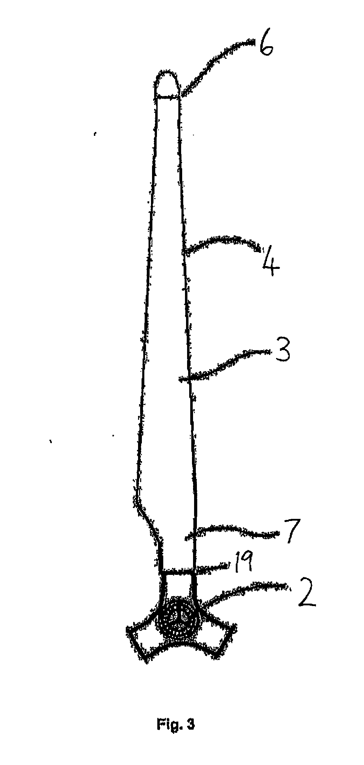

FIG. 3 is an enlarged, close up frontal view of a rotor blade 3. The FIG. 3 view highlights the reinforced blade tip and leading edge 4, the armour tip 6, a blade root 7 and a mounting bolt flange 19. The mounting bolt flange at the end of blade root 7 connects the blade 3 to the hub 2.

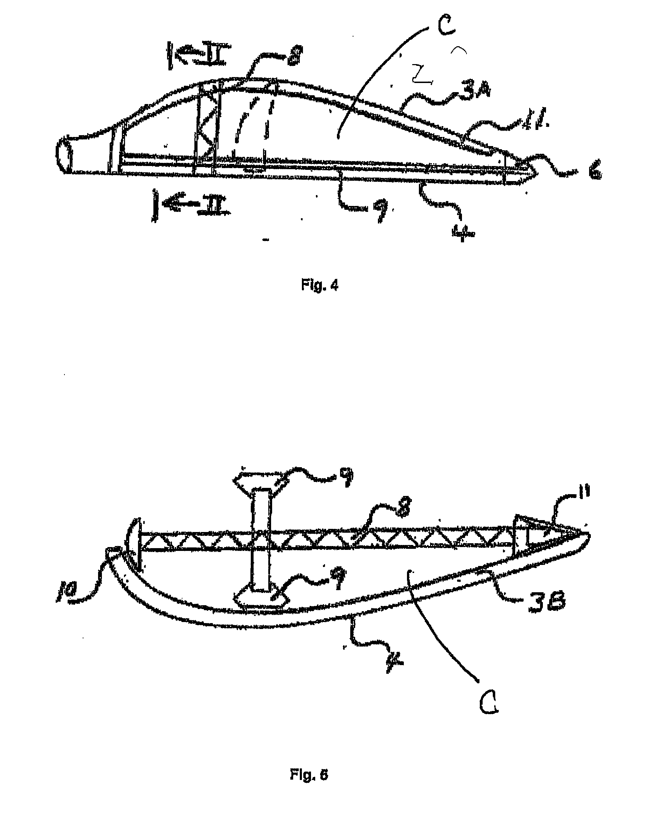

FIG. 4 is a sectional top view of a top half 3A of rotor blade 3, seen along line I - I shown in FIG 2. As seen in the figure, the top half comprises a support spar truss 8, extending between a leading edge spar cap 9 and a trailing edge spar cap 11. A rotor tip 6 and a trailing edge spar cap 11 are included in the blade construction to anchor sound deadening material formed in a cavity (C) thereby.

FIG. 5 is a sectional view of the bottom half 3B of rotor blade 3, seen along line II - II of FIG 4. As seen in the figure, a leading edge support and bonding base 10 is included to connect the two rotor halves 3A and 3B, when all the components are assembled. The spar cap 9, the support spar truss 8, and the trailing edge support and bonding base 11 are used to connect the two rotor blade halves 3A and 3B. Sound deadening material is first inserted in the cavity, as shown.

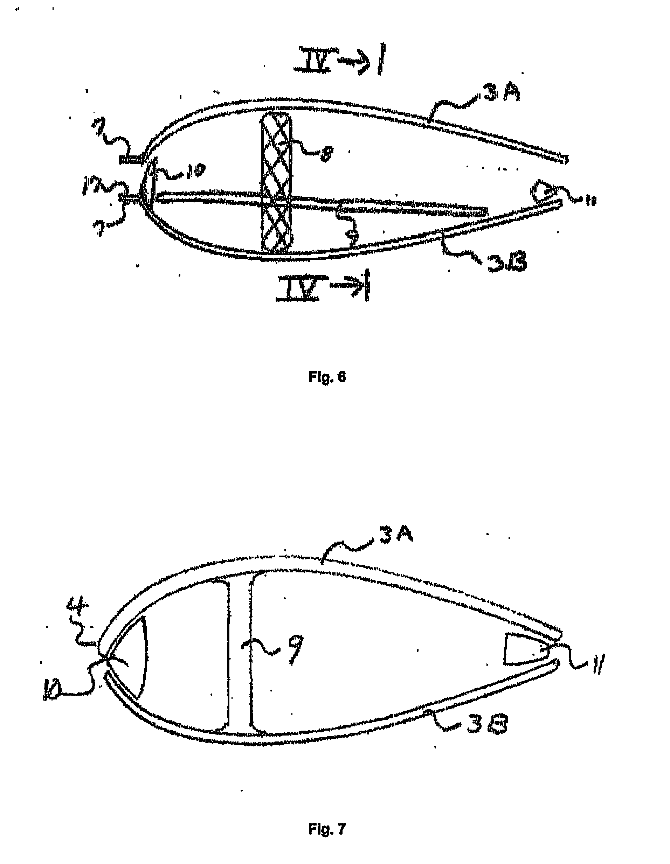

FIG. 6 is a sectional side view of the top half 3A and the bottom half 3B of rotor blade 3 (prior to permanent connection), as seen along the line I - I of FIG 2. A bond edge 17, a rotor root structure 7, the spar cap 9, support spar truss 8, and opposing trailing and the leading edge support and bonding bases 10 and 11 are used to connect the two rotor blade halves 3A and 3B (shown assembled). The figure shows the lower portion of rotor blade half 3B ready for bonding (i.e., to fix the two halves).

FIG. 7 shows two cross sectional side views of the separated top half 3A and the bottom half 3B of rotor blade 3, along line IV - IV as seen in FIG 6. The figure or view highlights the leading edge 4 and the leading edge support and bonding base 10 after it is installed and bonded to lower blade half 3B. The leading edge support and bonding base 10 is used to connect the two rotor blade halves 3A and 3B, after all the components are assembled. The spar cap 9 is fixed to lower rotor half 3B, the trailing edge support and bonding base 11 and to upper half 3A, to solidly and fixedly connect the two rotor blade halves 3A and 3B.

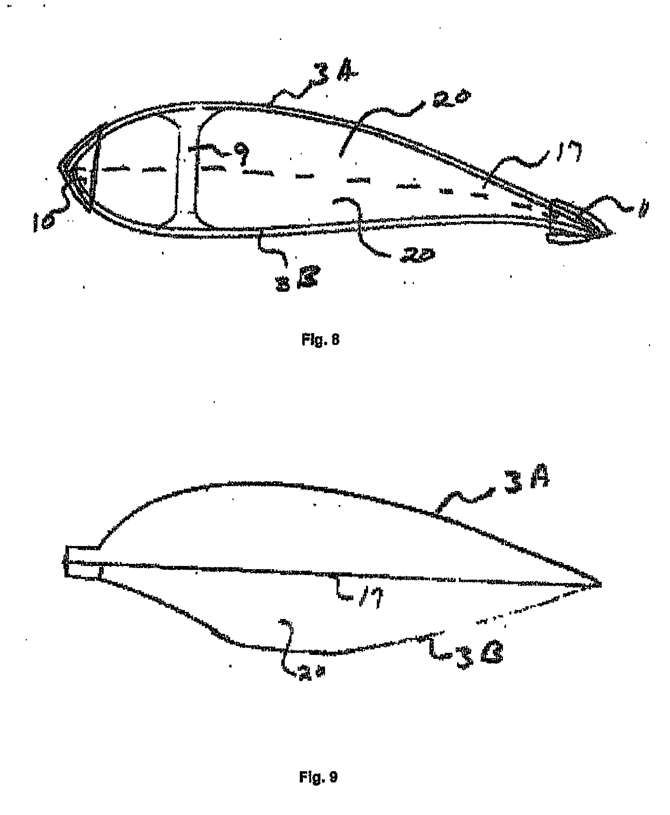

FIG. 8 is a cross sectional side view of the connected top half 3A and bottom half 3B of rotor blade 3, along line IV - IV as seen in FIG 6. The figure or view shows the two upper and lower rotor blade halves 3A and 3B assembled or connected, with an edge bonding 17, a rotor skin 20, and the spar cap 9.

FIG. 9 shows an external side view of rotor blade 3, with upper and lower rotor blade halves 3A and 3B bonded together at the bonding edge 17.

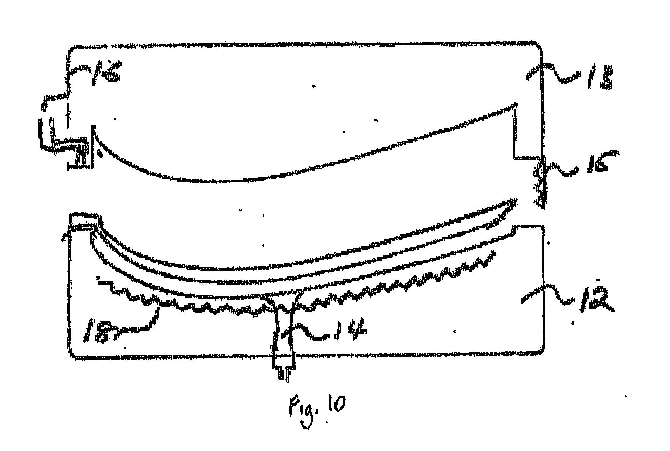

FIG. 10 shows a mould used to make a rotor blade half 3B. The mould includes a mould base 12 and a mould top 13, a clamping mechanism 15 to connect the mould base 12 and the mould top 13, a vacuum source 14, a resin supply line 16 and heating elements 18.

In more detail, the process for constructing a rotor blade construction includes starting with two shells, i.e., upper and lower rotor blade halves 3A and 3B, which shells comprise rotor skins 20. When combined, 3A and 3B rotor skins 20 produce a hollow interior with the several components contained therein (see Figs. 4-9). That is, the rotor blade support skeleton comprises spar truss 8, spar cap 9, leading edge support and bonding base 10, the trailing edge support and bonding base 11, sound deadening material in the cavity surrounded by the rotor skins 20, the leading edge 4 and the tip and leading edge impact armour 6. The rotor is made in two sections 3A, 3B split down the long axis, which when bonded with edge bonding laminate 17, together create the generally hollow blade that is matted to the nacelle hub 2 using steel bolts that have been imbedded and bonded into the rotor blade root 7 at hub attachment flange 19.

The rotor blade top half 3A and the bottom half 3B are layered with fibreglass filaments and other reinforcing fibres as may be selected and other polymer based thermoplastic films into the moulds 12,13 (FIG. 10) as the reinforcement material for the polymer matrix composite. Crystal clear polymer resins and hardeners, first refined and filtered to remove light absorbing impurities, are infused into the layers through the resin feed apparatus 16 under vacuum pressure provided by a vacuum port 14 (FIG. 10). This vacuum assisted resin infusion wets up all the fibre reinforcements quickly and thoroughly, eliminating bubbles and clears up the fibre reinforcements.

Other layers of speciality films may be included to improve the strength of the rotor blade, which are applied to form laminate layers to the rotor blade skin 20, i.e., skin 20 is formed from the layered glass laminates. For strength and clarity glass-to-resin ratios of 70:30 or higher can be achieved, compared with the typical 50:50 ratio of the prior art, resulting in lighter, clearer and stronger parts.

Thermo pressure curing with vacuum resin infusion assistance is used to combine the resin with fibre reinforcements and shape the laminate composite component in the mould. Each blade half is placed under pressure in FIG. 10 using clamping mechanism 15 to produce a void free, bubble free part that has a completely smooth surface on both sides. Any imperfection in the smoothness of the surface would have a detrimental effect of light transmission through the parts.

The fibres and resin mixtures are heated to a pliable state and allowed to cure in the mould while under pressure. The result is a substantially perfectly smooth surface that does not require any further conditioning other than final polishing. When heating and curing time has concluded, the finished rotor blade half is removed from the mould and configured for final assembly, i.e., bonding of transparent internal support structures and the other half of the blade. The moulds (FIG. 10) 12 and 13 include heating elements 18, which allow the heating of the composite layers used in the construction of the rotor blade.

As already mentioned, the blades are preferably made of 70% to 75% glass by weight. The blade shapes are aerodynamically designed according to very strict mechanical requirements, e.g., high rigidity, resistance to torsion and fatigue. High static and dynamic loads over a wide temperature range are typical during a 20-yr service life. A standard 35- to 40-metre blade for a 1.5-MW turbine weighs 5.5 to 6.5 tonnes (6 to 7 short tons). 60 meter blades weigh as much as 12.7 tonnes (14 short tons).

Both epoxy and polyester, and to a lesser extent vinyl ester, shared the wind blade business in the early days but epoxy earned preferred status as blades grew longer. Epoxy offers stronger mechanical performance— particularly tensile and flexural strength—for blades longer than 26 m (85 ft). The invention uses epoxy and or polyester based resins that have been refined to crystal clear clarity to maximize transmission of light through the blade and formulated so the RI (refractive index) of all components match after the part has cured and cooled. Special note should be made that some of the component RI's change during the heating and curing process so these changes must be anticipated and planned for to produce a matched RI finished product.

"Pre-preg" is a term for "pre-impregnated" composite fibres. These usually take the form of a weave, or are uni-directional. Pre-preg moulding with a woven or unidirectional glass fabric is more costly but offers greater consistency because it already contains the matrix material used to bond them together and to other components during manufacture. The pre-preg is mostly stored in cooled areas since activation is most commonly done by heating. Special Glass pre-pregs may be used to speed the lay up time into the mould. These RI matched fibres and the crystal clear refined epoxy resin and hardener are introduced by vacuum infusion, whereby the pre-preg moulding takes 12 to 24 hr. Mould pressure is applied to squeeze the composite into exact tolerance so that each part is a perfect duplicate with perfectly smooth sides inside and out.

Vacuum consolidation was chosen as a process because it is relatively simple. Vacuum consolidation comprises a lay-up of glass fibre layers, an application of vacuum, infusion of resin and other liquid ingredients, a ramp up to process curing temperature, application of mould pressure, a cool-down and de-moulding. Selection of composite material is influenced by such specified blade properties including light transmission, light reflection, light refraction, refractive index, strength, weight and cost. Optimal strength is increased when straight, continuous fibres are aligned parallel in a single direction. To promote strength in other directions, laminate structures may be constructed with continuous fibres aligned in other directions as well as chopped strand.

Cost of production is reduced from prior art manufacturing methods which use balsa wood and foam cores to establish the skeletal shape of the rotor blade, which skeletal shapes are later wrapped in a polymer composite skin. The machined moulds 12 and 13 (FIG. 10) can be manufactured from a multitude of materials like aluminium or steel. As a result, no balsa wood or foam cores are used to create the shape of the rotor blade saving time, labour, material and money. Each rotor blade upper and lower half (3A and 3B) is reproduced as an exact replica of the model used to create the mould. This minimizes post-manufacturing pre-assembly adjustment to the component parts, typically required to get them to fit together properly, which saves time, money and labour, i.e., overhead.

The rotor blade internal support skeleton comprising the spar cap 9, support spar truss 8, and opposing trailing and the leading edge support and bonding bases 10 and 11, is fabricated in a unique configuration of a multitude of pieces and long stringer pieces made from the same transparent fibres and resin used to make the self supporting shell halves 3A and 3B. These internal support components are arranged in a honeycombed or intertwined modular pattern or other pattern to maximize the strength of the support structure and reduce the weight. They are bonded using a select combination of resins and hardeners applied in a controlled process to maximize clarity and eliminate absorption of visible light.

Once the bottom rotor blade section 3B is finished, the transparent components of the interior support structure are installed and bonded to the blade skin 20. The spar cap 9, the support spar trusses 8, the trailing and the leading edge support and bonding bases 10 and 11 used to connect the two rotor blade halves 3A and 3B are assembled in the lower portion of rotor blade 3B with to top half of rotor blade 3A is prepared for assembly and bonding. The tip 6 and the leading edge 7 have recesses notched into the interior to accommodate heating/de-icing, crack monitoring and lightning protection components. All components not made of transparent material, such as copper cable for lightning strike will be miniaturized to limit visibility. The trailing edge support and bonding base 11 includes a sound deadening fringe material attached to it to reduce turbulence and related noise.

A flexible mirror type reflecting coating may be applied to parts of the wind tower system, whose material of construction is opaque. The mirror coating application is either applied with adhesive in sheets or sprayed on to the part. The mirror type reflective coating can be flat or shaped. On curved surfaces, the flat mirror surface will effectively hide the opaque portions of the wind tower system without presenting a clear image of the landscape or reflect a full image of the sun or other light source. The surface of the mirror type reflecting coating can be textured in geometric pattern to reflect the landscape surrounding the tower in a diffuse unrecognizable fragmented or fractured multidirectional reflective pattern.

A multitude of random geometric shapes can be applied to redirect the landscape such a grid of pyramid reflective shapes with the apex pointing away from the substrate it is applied to. This eliminates the prior art limitation of having to select a specific colour or pattern of camouflage (as described above), to be ineffective in some applications as it changes in changing environment, i.e., a tower painted sky blue to blend into a clear blue sky would appear obvious and visible against a white cloudy sky. The reflective mirror material uses the surrounding landscape to present a camouflage effect to the observer.

Although examples of the present invention have been shown and described, it would be appreciated by those skilled in the art that changes may be made in these embodiments without departing from the invention, the scope of which is defined in the following claims and their equivalents.

## Claims

1. A wind tower system, comprising:
a plurality of wind tower system rotor blades (3) comprising substantially clear composite fibre reinforced polymer (FRP), resin and hardener polymers;
a nacelle (5) made at least partially from composite FRP or a steel-based material;
a hub (2) connecting the plurality of wind tower system rotor blades (3) to the nacelle (5); and
a tower (1) upon which the nacelle is connected;
wherein the wind tower system rotor blades (3) include means for minimizing wind turbulence and, therefore, sound during active wind tower system operation and freely transmit light to minimize blade light reflectivity and therefore visual presence and wherein the nacelle (5) and tower (1) are coated to reduce visual impact.

2. The wind tower system as defined in claim 1, wherein the tower (1) is constructed of steel and FRP.

3. The wind tower system as defined in claim 1 or 2, wherein the nacelle (5) houses electronics, a generator, gearing and other infrastructure for generating electricity.

4. The wind tower system as defined in claim 1, 2 or 3, wherein the FRP polymer resin and hardener include substantially no light obstructing components to realize component parts (6, 8, 9,10, 11) constructed to be transparent and substantially clear.

5. The wind tower system as defined in any preceding claim, wherein FRP filaments, polymer resin and hardeners used in composite parts (6,8,9,10, 11) are manufactured with specific tolerances and exact matching RI (refractive indexes) to produce a substantially clear transparent composite structure.

6. The wind tower system as defined in any preceding claim, wherein the FRP, polymer resin, hardener and fibre filaments are combined to form an FRP rotor blade (3) with a reduced weight and consistent tensile strength that is clear and light transparent.

7. The wind tower system as defined in claim 6, wherein the FRP fibre filaments are manufactured with specific RI tolerances of chemical additives called size that are engineered to match the RI of the fibre filaments.

8. The wind tower system as defined in claim 7, wherein size is a coupling agent that causes the fibre to have an affinity for particular resin chemistry, thereby improving resin wet out and strengthening the adhesive bond at the fibre-matrix interface to improve blade fatigue life without interfering with light transmission.

9. The wind tower system as defined in any preceding claim, wherein each tower section is constructed partially of FRP, steel or other material to have a hollow centre after assembly.

10. The wind tower system as defined in any preceding claim, wherein the means for reducing wind turbulence is found on a trailing edge of each rotor blade (3) to include a sound deadening transparent fringe that reduces turbulence related noise.

11. The wind tower system as defined in claim 10, wherein the fringe spreads out an area of impact of two airstreams colliding behind the trailing edge into micro turbulence areas, and thereby muffles the noise associated with the air turbulence.

12. A method of manufacturing a wind tower system rotor blade (3), comprising:
inserting a plurality of layers of resin-impregnated fibres in respective top and bottom upper and lower blade half shell moulds (12,13) configured such that when joined, the two blade halves (3A, 3B) form a trailing edge with a sound deadening fringe;
injecting resin into the moulds (12, 13) using vacuum infusion to render the rotor blades (3) substantially light transmissive;
thermo curing and pressure forming to create a blade shape;
further vacuum treating to purge the resin-impregnated fibres of any air to optimize clarity, strength and transparency; and
heating to activate chemical processes to cure the resin and adjust RI.

13. The method of manufacturing as defined by claim 12, wherein the layers of resin-impregnated fibres are oriented at between 0 and 90 degrees with respect to a longitudinal access of the mould (12,13).

14. The method of manufacturing as defined in claim 12 or 13, further comprising removing the upper and lower shells (3A, 3B) and fixedly connecting them to each other by use of an internal skeleton support structure comprising a spar (9), a spar cap beam (8), a blade tip (6) and bond bases (10, 11) bonded to each half of the blade.

15. The method of manufacturing as defined by claim 14, wherein the components (8, 9,10,11) of the internal skeleton support structure are formed with transparent material, which matches the refractive index (RI) and transparency of the rotor blade shells (20).
